# EUROPEAN PATENT SPECIFICATION

(11) **EP 4 627 926 B1**
(45) Date of publication and mention of the grant of the patent: **23.09.2026**
(21) Application number: 24168537.9
(22) Date of filing: 04.04.2024
(51) Int. Cl.: A21C 11/00

(54) **A PRESS AND A METHOD FOR FORMING A DEFORMABLE ITEM PROVIDED IN A MOULD IN TURN PROVIDED ON A TRAY MOVABLE IN RELATION TO THE PRESS**
EINE PRESSE UND EIN VERFAHREN ZUM FORMEN EINES VERFORMBAREN GEGENSTANDES, DER IN EINER FORM VORGESEHEN IST DIE WIEDERUM AUF EINEM RELATIV ZUR PRESSE BEWEGLICHEN TABLETT ANGEORDNET IST
UNE PRESSE ET UN PROCÉDÉ DE FORMAGE D'UN OBJET DÉFORMABLE CONTENU DANS UN MOULE À SON TOUR PLACÉ SUR UN PLATEAU MOBILE PAR RAPPORT À LA PRESSE. À SON TOUR PLACÉ SUR UN PLATEAU MOBILE PAR RAPPORT À LA PRESSE

(30) Priority: 01.04.2024 PT 2024119358
(43) Date of publication of application: 08.10.2025
(73) Proprietor: FERNETO, S.A., 3840-385 Vagos (PT)
(72) Inventor: Neto dos Santos, Pedro, 3840-385 Vagos (PT)
(74) Representative: do Nascimento Gomes, Rui

(56) References cited:
- DE-A1- 1 757 282
- GB-A- 1 238 648
- US-A- 4 973 240
- US-B2- 8 662 313
- US-B2- 8 784 918

## Description

### TECHNICAL FIELD

The present disclosure refers to the area of presses, having examples within the field of dough presses.

### PRIOR ART

A press is an apparatus which, for a deformable item, uniformly compresses, shapes, and/or flattens such item into specific dimensions and configurations. The design and functionality of the press aim to enhance efficiency, precision, and consistency in the preparation of the items to be process in industrial or domestic settings.

Presses may take different forms, and typically have a preset course of movement. Along such movement, a surface of the press - a pressing element - meets a surface of the deformable item, and the pressing element continues pressing the deformable item until a present distance or height is met. Since the deformable item is provided on a surface, the preset distance or height refers to a distance between a final position of the press when pressing and the surface on which the item is provided.

Such distance also defines the final thickness of the deformable item.

The deformable item may simply be stretched along the surface, due to the pressing action of the press, or - when it is provided in a mould - be deformed along such mould, thereby taking a form resulting from the form of the mould and of the pressing element.

Such known solutions are advantageous while being simple and very effective.

Still, many applications exist in which it is not enough to define a distance between the pressing element and the surface in which the deformable item is provided. For instance, if the volume of the deformable item is typically variable, within certain limits. This means that a same distance applied by the same press will result in that variability being transferred to the area along which the deformable item stretched during pressing.

For instance, when the deformable item is provided in a mould, that may lead to spilling.

GB 1 238 648 A discloses paste confectionery lining production machine.

The solution of the present disclosure is directed to such issue, allowing to comply with such variability circumstances.

### SUMMARY OF THE DISCLOSURE

The present disclosure comprises a press for forming a deformable item provided in a mould in turn provided on a tray movable in relation to the press.

The press comprises:
i) pressing means comprising a pressing surface movable between a rest position away from the deformable item when provided in the mould and a pressing position in which the deformable item is pressed by the pressing surface,
ii) pressure control means, the pressure control means being configured to measure and control the pressure that the pressing means exert on a deformable item provided in the mould,
wherein the movement of the pressing means between the rest and the pressing positions is such that the pressing position is adaptable based on the measured pressure, the pressing position being established as corresponding to the position in which the measured pressure corresponds to a preset pressure.

The movement of the pressing surface may be performed along a direction perpendicular to the tray.

The press may further comprise a plurality of moulds, the moulds being individually and movably couplable to the tray.

The tray may be movable along a second direction such that each mould and each corresponding deformable item reaches a position coincident with the pressing position. The tray may comprise a conveyor belt. The press may movable in relation to the tray by means of translation means.

The pressure control means may comprise computational means configured to digitally actuate the movement of the pressing means.

The pressing means may further comprise a crankshaft and pneumatic means, the crankshaft being configured to jointly move the pneumatic means and the pressing surface, and the pneumatic means being configured to adjust the movement of the pressing means between the rest and the pressing positions such that the pressing position is adaptable by the pneumatic means.

The press may further comprise a pressure valve, the pressure valve being configured to release excessive pressure from the pressing means upon the establishment of the measured pressure corresponding to a preset pressure.

The press may further comprise, based on at least one parameter of the deformable item, adapting the preset pressure.

The press may be a dough press, the deformable item consisting of a piece of dough provided in a mould.

The press may further comprise, based on at least one parameter of the dough, adapting the preset pressure.

The present disclosure further comprises a method for pressing and forming a deformable item provided in a mould, the mould in turn being provided on a tray.

The method may comprise:
i) providing the deformable item on a mould,
ii) initiating the movement of a pressing surface from a rest position away from the deformable item towards a pressing position in which the deformable item is pressed by the pressing surface,
iii) measuring the pressure that the pressing means exert on the deformable item provided in the mould,
iv) establishing the pressing position and stopping the pressing surface when the measured pressure corresponds to a preset pressure, thereby forming the deformable item in the tray.

The movement of the pressing surface may be performed along a direction perpendicular to the tray.

The moulds may be a plurality of moulds, individually and movably coupled to the tray.

The movement of the tray may be along a second direction such that each mould and each corresponding deformable item reaches a position coincident with the pressing position. The tray may comprise a conveyor belt. The press may be moved in relation to the tray by means of translation means.

The movement of the pressing means may be digitally actuated.

A crankshaft may jointly move the pneumatic means and the pressing surface, and the pneumatic means may adjust the movement of the pressing means between the rest and the pressing positions such that the pressing position is adaptable by the pneumatic means.

Excessive pressure from the pressing means upon the establishment of the measured pressure corresponding to a preset pressure may be released by means of a pressure valve.

The method may further comprise, based on at least one parameter of the deformable item, adapting the preset pressure.

The deformable item may be a piece of dough provided in a mould.

The present disclosure may further comprise the use of the press of the present disclosure as a dough press, the deformable item consisting of a piece of dough and the mould consisting of a mould for providing and forming a piece of dough.

### DESCRIPTION OF THE DRAWINGS

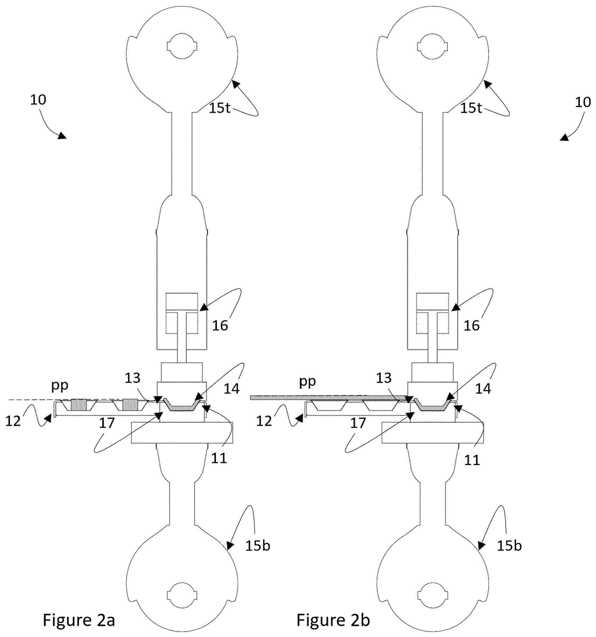

Figure 1a - a cross-section schematic representation of a press (10) according to the present disclosure. The mould (11) and the tray (12) are provided centrally. In such case, it is the tray (12) that is movable and moved. The mould (11) provided in the press (10) contains a piece of dough. Other moulds provided along the tray (12) are waiting for processing. The pressing surface (13) is arranged above the mould (11) to be processed, and away from it and the corresponding deformable item, thus in the rest position. In connection with the pressing surface (13) are a crankshaft (15t) and pneumatic means. The crankshaft (15t) is configured to jointly move the pneumatic means (16) and the pressing surface. The pneumatic means (16) provide the adjustment of the movement of the pressing means - thus of the pressing surface (13) - between the rest and the pressing positions (see Figure 2a). Thus, the pressing position (pp) is adaptable by the pneumatic means, which in turn are controlled by the pressure control means (not shown). Said crankshaft (15t) consists of a top crankshaft (15t), while the press (10) comprises a second crankshaft (15b) provided below - a bottom crankshaft (15b). The press (10) also comprises a second pressing surface (17) provided below and jointly coupled to the bottom crankshaft (15b), such that it jointly moves with the bottom crankshaft (15b). The bottom crankshaft (15b) is configured to move the bottom pressing surface (13) between a position away from the mould (11) and a position adjacent to the mould. The bottom pressing surface (13) is adjacent to the mould (11) when the pressing surface (13) moved by the top crankshaft (15t) is also adjacent to the mould, such that they jointly press (10) the mould (11) and its content and forming the piece of dough. In the Figure, the bottom crankshaft (15b) provides the bottom pressing surface (13) away from the mould.

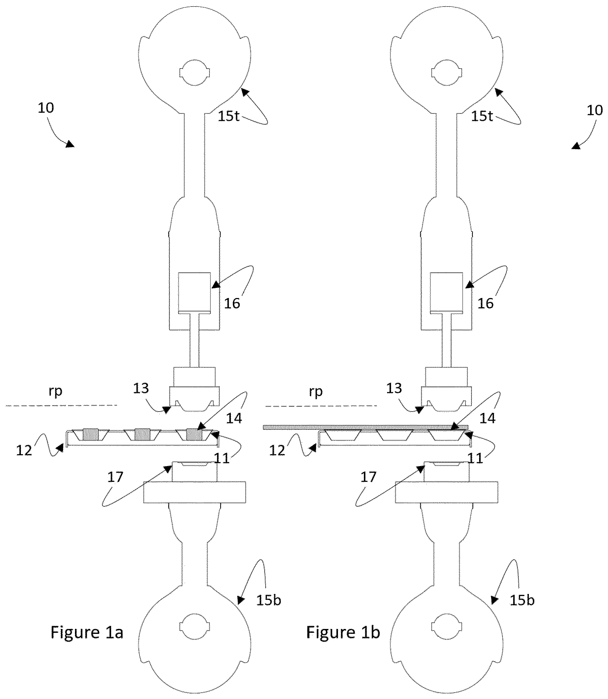

Figure 1b - a cross-section schematic representation of the press (10) of Figure 1a, except in that instead of a piece of dough being provided inside each mould, a sheet of dough extends along the several moulds, the sheet of dough forming the deformable item.
Figure 2a - a cross-section schematic representation of the press (10) of Figure 1a, in this case the pressing surface (13) being in the pressing position. The top crankshaft (15t) was moved and correspondingly made the pneumatic means (16) to move and to place the pressing surface (13) in the pressing position. The pneumatic means (16) have thus adjusted such that the pressure that the pressing means/pressing surface (13) exert on the piece of dough is controlled to a desired value. In the Figure, the bottom crankshaft (15b) provides the bottom pressing surface (13) adjacent to the mould.
Figure 2b - a cross-section schematic representation of the press (10) of Figure 2a, except in that instead of a piece of dough being provided inside each mould, a sheet of dough extends along the several moulds, the sheet of dough forming the deformable item.

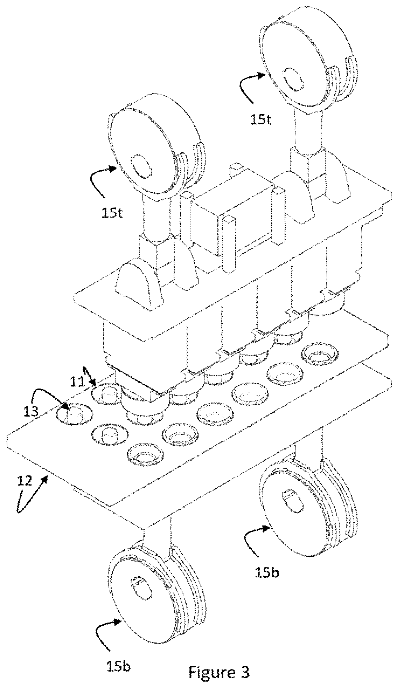

Figure 3 - a perspective view of a system which contains a plurality of presses according to the present disclosure and which also contains translation means. The translation means (18) allow the presses to move in two directions part of a surface which is perpendicular to the direction of movement of the pressing means, and which are parallel to the surface in which the tray (12) and the moulds are provided. The represented moulds are part of a tray (12) which thus contains several moulds. The presses are thus movable in order to form the several deformable items provided in the several moulds. The system is configured such that two top crankshafts (15t) and corresponding bottom crankshafts (15b) are shared by six pneumatic means (16) and corresponding pressing surfaces, as well as corresponding second pressing surfaces. The two top crankshafts (15t) and corresponding bottom crankshafts (15b) are synchronized such that their movement causes the associated pneumatic means (16) and corresponding pressing surfaces, as well as corresponding second pressing surfaces, to move in a synchronized manner, thereby pressing the corresponding pieces of dough.

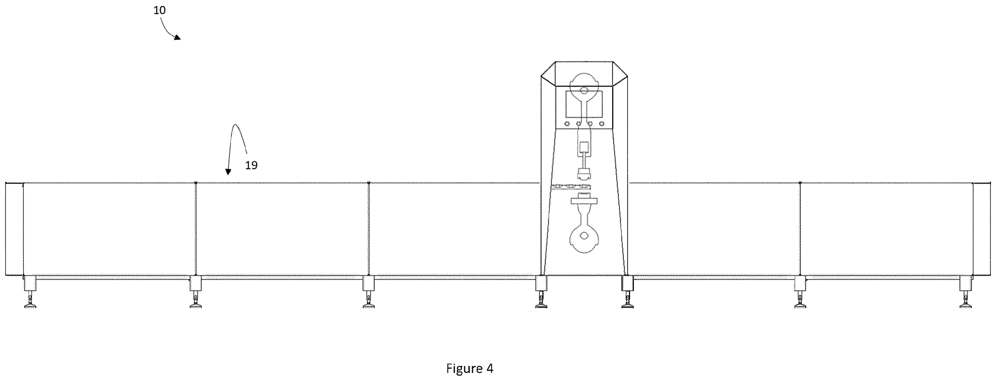

Figure 4 - a side representation of a press (10) according to the present disclosure, and representing elements which are complementary and support a tray (12) which is movable in relation to the press, particularly the tray (12) moving and the press (10) being fixed.

### DETAILED DESCRIPTION

The present disclosure refers to a press (10) configured to form a deformable item (14) provided in a mould (11) which in turn is provided on a tray. The press (10) presses the deformable item (14) when on the mould, and the deformable item (14) is formed according to the form of the press (10) and of the mould. In particular, the deformable item (14) is formed according to the form of the pressing surface (13) of the pressing means of the press.

Moulds containing deformable items are provided along the tray. The tray (12) may move such that the deformable items in subsequent moulds are subsequently pressed. Alternatively, it may be the press (10) moving in relation to a fixed tray.

The deformable item (14) may consist of a piece of dough, wherein a piece of dough is provided inside a mould (11) for subsequent forming, or a sheet of dough, the sheet of dough extending through several moulds (11) such that, when the pressing surface (13) presses such mould, not only it forms the corresponding part of the sheet of dough provided on the mould (11) as it also cuts it, thereby separating it from the remaining sheet of dough. The process is repeated for the next mould (11) having the continuous sheet of dough still provided on it.

The mould (11) may have different forms, such as prismatic - such as a parallelepiped -, cylindrical or troncoconic. In all cases, it forms a cup in which the deformable item (14) is provided and formed, when pressed. The maximum width of the opening of the mould (11) may have 20-200 mm, optionally 30-100 mm, optionally 35-85 mm.

The press (10) of the present disclosure comprises pressing means. The pressing means may be further constituted by several elements including a pressing surface. The pressing surface (13) is the element of the pressing means - and of the press (10) - which contacts the deformable item. The pressing surface (13) may be flat or have other forms, namely forms which form embossments on the surface of the formed deformable item. Examples of other forms of the pressing surface (13) may include its peripheral region being bent. In any case, the pressing surface (13) has a form which is compatible with pressing a deformable item (14) provided within a mould. Preferably, such form includes the press (10) entering the mould (11) and forming the deformable item (14) when provided in the mould.

The pressing surface (13) may take the form of a punch, thereby punching the deformable item.

In addition, the pressing surface (13) is movable between a rest position (rp) away from the deformable item (14) - when the deformable item (14) is provided on the mould (11) - and a pressing position (pp) in which the deformable item (14) is pressed by the pressing surface.

Moreover, the movement of the pressing surface (13) may be performed along a direction perpendicular to the tray. Typically, such movement is coincident with a vertical movement, aligned with the gravity vector. The tray (12) is thus provided horizontally, thus perpendicularly to the gravity vector. Such allows the deformable item (14) to easily rest on the tray/mould.

The press (10) further comprises pressure control means, the pressure control means being configured to measure and control the pressure that the pressing means - and, particularly, the pressing surface (13) - exert on a deformable item (14) provided in the mould.

In addition, the movement of the pressing means between the rest and the pressing positions is such that the pressing position (pp) is adaptable based on the measured pressure, the pressing position (pp) being established as corresponding to the position in which the measured pressure corresponds to a preset pressure.

This configuration allows to release the act of pressing from a preset distance which defines the final thickness of the deformable item (14) upon forming. Thus, it also avoids the issue of spilling.

This, since by setting the pressure, the solution of the present disclosure guarantees that a maximum force per surface area is not exceeded and, thus, that even though the volume of deformable item (14) may vary, the stretching/spreading of the deformable item (14) resulting from the pressing is constant/reproductible.

The press (10) may further comprise a plurality of moulds, the moulds being individually and movably couplable to the tray. For instance, each mould (11) may be coupled to the tray (12) through magnetic means.

The tray (12) may be movable along a second direction such that each mould (11) and each corresponding deformable item (14) reaches a position coincident with the pressing position. The tray (12) may take different forms, for instance comprising a conveyor belt. In such case, the tray (12) may comprise a conveyor belt (19) with magnetic means, which couple to corresponding moulds.

The pressure control means may comprise computational means configured to digitally actuate the movement of the pressing means. The actuation of the pressure control means is thus based on computational means which issue commands for controlling the operation of the pressing means. According to the present invention, the pressure control means thus contain a controller, such as a microcontroller.

The pressing means may further comprise a crankshaft (15t) and pneumatic means, the crankshaft (15t) being configured to jointly move the pneumatic means (16) and the pressing surface, and the pneumatic means (16) being configured to adjust the movement of the pressing means between the rest and the pressing positions such that the pressing position (pp) is adaptable by the pneumatic means.

Such crankshaft (15t) consists of a first crankshaft, provided above the mould (11) and thus consisting of a top crankshaft. Associated to the tray (12) may be provided a second crankshaft, represented in figures 1a-2b. Such second crankshaft (15t) is provided below the mould (11) and the top crankshaft (15t) - a bottom crankshaft. The press (10) may also comprise a second pressing surface (17) provided below and jointly coupled to the bottom crankshaft, such that it jointly moves with the bottom crankshaft. The bottom crankshaft (15t) is configured to move the bottom pressing surface (13) between a position away from the mould (11) and a position adjacent to the mould. The bottom pressing surface (13) is adjacent to the mould (11) when the pressing surface (13) moved by the top crankshaft (15t) is also adjacent to the mould, such that they jointly press (10) the mould (11) and its content and forming the piece of dough. In the Figure, the bottom crankshaft (15t) provides the bottom pressing surface (13) away from the mould.

The press (10) may further comprise a pressure valve, the pressure valve being configured to release excessive pressure from the pressing means upon the establishment of the measured pressure corresponding to a preset pressure.

The press (10) may further comprise, based on at least one parameter of the deformable item, adapting the preset pressure.

Thus, depending on the deformable item (14) being formed by means of the press, the operation of the press (10) may be adapted, allowing a high adaptability to the material being processed.

As previously described, the press (10) comprises a crankshaft (15t) associated with pneumatic means (16) and a pressing surface (13). The crankshaft (15t) moves and correspondingly moves the pneumatic means (16) and the pressing surface (13), between the rest (rp) and pressing positions (pp). An adjustment is made on the pressing position (pp) based on the measured pressure, particularly actuating the pneumatic means (16) to perform such adjustment. The control is made by the control means.

Such movement may be regarded as a top movement, since such elements are provided above the tray (12) and the mould (11). If considering figures 1a-2b, the crankshaft is a top crankshaft (15t), moving cyclically up and down. The pressing surface (13) may be referred to as a first pressing surface, a top pressing surface.

The press (10) may also comprise a second crankshaft (15b) provided below the mould and the tray (12) - a bottom crankshaft (15b). The crankshaft also moves between the rest position (rp) and the pressing position, symmetrically to the top crankshaft (15t). Particularly, when the top crankshaft (15t) is in its movement from up to down, which finalizes when the pressing surface (13) is in the pressing position (pp), the bottom crankshaft (15b) is in a movement from down to up, also finalizing when the pressing surface (13) is in the pressing position (pp). The two crankshafts (15t, 15b) thus cooperate in order to jointly press the deformable item (14) provided in/on the mould (11). No pneumatic means (16) are associated with the bottom crankshaft (15b) and the second pressing surface (17). The second pressing surface (17) moves jointly with the bottom crankshaft (15b), following its movement.

The bottom crankshaft (15t) is thus also configured to move the bottom pressing surface (13) between a position away from the mould (11) and a position adjacent to the mould (11).

The press (10) may be a dough press, the deformable item (14) consisting of a piece of dough provided in a mould. In such case the press (10) may further comprise, based on at least one parameter of the dough, adapting the preset pressure. Specifically, the press (10) of the present disclosure may consist of a dough press.

Dough refers to a malleable mixture primarily composed of flour, water, and often yeast or other leavening agents. Typically, dough undergoes fermentation and/or chemical reactions to achieve a specific texture and elasticity. This mixture may also include additional ingredients such as salts, sugars, fats, and various flavourings to enhance taste, texture, and nutritional value. Dough serves as the foundational substance in the preparation of a wide range of baked goods, such as breads, pastries, pizzas, and other culinary products. The specific composition and processing conditions of dough can vary widely, depending on the desired characteristics of the final product, including texture, density, flavour, and appearance.

The present disclosure refers to, when the press (10) is a dough press, the processing of dough in a mould, such as a cup, to form the dough within the cup. Other additional ingredients may then be provided within the formed dough in the cup. The assembly of the cup, formed dough and additional ingredients may then be baked to form the final product.

A dough press (10) is an apparatus which uniformly compresses, shapes, and/or flattens dough into specific dimensions and configurations. In the present disclosure, also into the form of the corresponding mould. The design and functionality of the dough press (10) aim to enhance efficiency, precision, and consistency in the preparation of dough-based products within commercial or domestic settings.

Even when consisting of a dough press, the press (10) of the present disclosure is suitable for a wide range of applications. Still, such example is given, for further illustrating its application as a dough press.

A possible implementation of the dough provided within the cup is dough for baking *"pastel de nata"* or custard pie. *Pastel de nata* is a traditional Portuguese pastry known for its distinctive custard tart characteristics.

The dough provided within a cup may be formed to that cup and, upon baking, forms a flaky, crisp pastry shell. Prior to baking and after moulding, it is filled with a mixture containing milk, egg yolks, sugar, and flavourings such as vanilla and cinnamon which, upon baking, forms a smooth, creamy custard. The tart is characterized by its blistered, caramelized surface, achieved through high-temperature baking, which contrasts with the soft, rich custard filling. Traditionally, Pastel de Nata is baked in a round, shallow form, resulting in a distinctive circular shape with a diameter typically ranging from 5 to 8 centimetres and a height of approximately 3 to 4 centimetres.

The present disclosure may further comprise a system. The system may include a plurality of presses according to the present disclosure and translation means, allowing the presses to move in two directions part of a surface which is perpendicular to the direction of movement of the pressing means, and which are parallel to the surface in which the tray (12) and the moulds are provided. The represented moulds are part of a tray (12) which thus contains several moulds. The presses are thus movable in order to form the several deformable items provided in the several moulds.

The system may be configured such that it comprises *n* presses in turn comprising *n* pressing surfaces to each corresponding one pneumatic means, the presses comprising m crankshafts where *m* < *n,* whereby to at least two pressing surfaces and corresponding pneumatic means (16) corresponds one crankshaft, such that the movement of one crankshaft (15t) causes the at least two pressing surfaces and corresponding pneumatic means (16) to move together and synchronously between the rest and pressing positions. Such arrangement is represented in Figure 3 for two crankshafts, two each being associated three pressing surfaces and corresponding pneumatic means. To each set of pressing surface (13) and pneumatic means (16) may correspond one control means, or to a plurality of pressing surfaces and pneumatic means (16) may correspond a single control means. The single control means may thereby control the operation of the least two pressing surfaces (13) and means (16) operating associated with one crankshaft (15t), thereby adapting the pressing position based on the measured pressures.

Although the present disclosure is mainly described in terms of apparatuses and methods, the skilled person understands that it is also directed to various devices or apparatuses, which may include one or more computational devices, installed locally or remotely.

For instance, the method of the present disclosure may be implemented by the press (10) of the present disclosure, including an electronic or computational device installed locally or remotely.

The press (10) of the present disclosure comprises an electronic or computational device or, for instance, a programmable controller, having computational means installed locally or remotely.

The press (10) may include components to perform at least some of the example features and features of the methods described, whether through hardware components (such as memory and / or processor), software or any combination thereof.

An article for use with the press, such as a pre-recorded storage device or other similar computer-readable medium, including program instructions recorded on it, or a computer data signal carrying readable program instructions computer can direct a device to facilitate the implementation of the methods described herein. It is understood that such apparatus, articles of manufacture and computer data signals are also within the scope of the present disclosure.

A "computer-readable medium" means any medium that can store instructions for use or execution by a computer or other computing device, including read-only memory (ROM), erasable programmable read-only memory (EPROM) or flash memory, random access memory (RAM), a portable floppy disk, a drive hard drive (HDD), a solid state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

1. A press (10) for forming a deformable item (14) provided in a mould (11) in turn provided on a tray (12) movable in relation to the press, the press (10) comprising
i) pressing means comprising a pressing surface (13) movable between a rest position (rp) away from the deformable item (14) when provided in the mould (11) and a pressing position (pp) in which the deformable item (14) is pressed by the pressing surface,
ii) pressure control means, the pressure control means comprising a programmable controller configured to measure and control the pressure that the pressing means exert on a deformable item (14) provided in the mould,
wherein the movement of the pressing means between the rest and the pressing positions is such that the pressing position (pp) is adaptable based on the measured pressure, the pressing position (pp) being established as corresponding to the position in which the measured pressure corresponds to a preset pressure.

2. A press (10) according to the previous claim wherein the movement of the pressing surface (13) is performed along a direction perpendicular to the tray.

3. A press (10) according to any of the preceding claims wherein it further comprises a plurality of moulds, the moulds being individually and movably couplable to the tray.

4. A press (10) according to the previous claim wherein the tray (12) or the press (10) is movable along a second direction such that each mould (11) and each corresponding deformable item (14) reaches a position coincident with the pressing position, optionally the tray (12) comprising a conveyor belt (19) or the press (10) is movable in relation to the tray (12) by means of translation means.

5. A press (10) according to any of the preceding claims wherein the pressure control means comprise computational means configured to digitally actuate the movement of the pressing means.

6. A press (10) according to any of the preceding claims wherein the pressing means further comprise a crankshaft (15t) and pneumatic means, the crankshaft (15t) being configured to jointly move the pneumatic means (16) and the pressing surface, and the pneumatic means (16) being configured to adjust the movement of the pressing means between the rest and the pressing positions such that the pressing position (pp) is adaptable by the pneumatic means, optionally the press (10) further comprising a pressure valve, the pressure valve being configured to release excessive pressure from the pressing means upon the establishment of the measured pressure corresponding to a preset pressure.

7. A press (10) according to any of the preceding claims wherein it further comprises, based on at least one parameter of the deformable item, adapting the preset pressure.

8. A press (10) according to any of the preceding claims in which it is a dough press, the deformable item (14) consisting of a piece of dough provided in a mould.

9. A press (10) according to claims 7 and 8 wherein it further comprises, based on at least one parameter of the dough, adapting the preset pressure.

10. A method for pressing and forming a deformable item (14) provided in a mould, the mould (11) in turn being provided on a tray (12) movable in relation to the press, the method comprising:
i) providing the deformable item (14) in a mould,
ii) initiating the movement of a pressing surface (13) from a rest position (rp) away from the deformable item (14) towards a pressing position (pp) in which the deformable item (14) is pressed by the pressing surface,
iii) measuring the pressure that the pressing means exert on the deformable item (14) provided in the mould,
iv) establishing the pressing position (pp) and stopping the pressing surface (13), through a programmable controller, when the measured pressure corresponds to a preset pressure, thereby forming the deformable item (14) in the tray,
optionally the movement of the pressing surface (13) is performed along a direction perpendicular to the tray.

11. A method according to the previous claim wherein the moulds are a plurality of moulds, individually and movably coupled to the tray, optionally wherein the movement of the tray (12) or the press (10) is along a second direction such that each mould (11) and each corresponding deformable item (14) reaches a position coincident with the pressing position, optionally the tray (12) comprising a conveyor belt (19) or the press (10) comprises translation means (18) moving it relation to the tray, optionally the movement of the pressing means being digitally actuated.

12. A method according to any of the claims 10-11 wherein a crankshaft (15t) jointly moves the pneumatic means (16) and the pressing surface, and the pneumatic means (16) adjust the movement of the pressing means between the rest and the pressing positions such that the pressing position (pp) is adaptable by the pneumatic means, optionally excessive pressure from the pressing means upon the establishment of the measured pressure corresponding to a preset pressure is released by means of a pressure valve.

13. A method according to any of the claims 10-12 wherein it further comprises, based on at least one parameter of the deformable item, adapting the preset pressure.

14. Use of the press (10) of any of the claims 1-9 as a dough press, the deformable item (14) consisting of a piece of dough and the mould (11) consisting of a mould (11) for providing and forming a piece of dough.

15. A system for forming a plurality of deformable items, the system comprising a plurality of presses according to any of the claims 1-9 and translation means, the translation means (18) being configured to move the presses in two directions part of a surface which is perpendicular to the direction of movement of the pressing means, and which are parallel to the surface in which the tray (12) and the moulds are provided, the deformable items being provided in the moulds, optionally, the presses are according to claim 6, the system comprising *n* presses in turn comprising *n* pressing surfaces to each corresponding one pneumatic means, the presses comprising m crankshafts where *m < n,* whereby to at least two pressing surfaces and corresponding pneumatic means (16) corresponds one crankshaft, such that the movement of one crankshaft (15t) causes the at least two pressing surfaces and corresponding pneumatic means (16) to move together and synchronously between the rest and pressing positions.

## Patentansprüche

1. Presse (10) zum Formen eines verformbaren Gegenstands (14), der in einer Form (11) angeordnet ist, die wiederum auf einem relativ zur Presse beweglichen Tablett (12) angeordnet ist, wobei die Presse (10) umfasst
i) eine Pressvorrichtung, die eine Pressfläche (13) umfasst, die zwischen einer Ruheposition (rp) - in der sie vom verformbaren Gegenstand (14) entfernt ist, wenn dieses in der Form (11) angeordnet ist - und einer Pressposition (pp) bewegbar ist, in der das verformbare Gegenstand (14) von der Pressfläche gepresst wird,
ii) Druckregelmittel, wobei die Druckregelmittel eine programmierbare Steuerung umfassen, die so konfiguriert ist, dass sie den Druck misst und regelt, den die Pressvorrichtung auf ein in der Form befindliches verformbares Gegenstand (14) ausüben,
wobei die Bewegung der Pressvorrichtung zwischen der Ruhe- und der Pressposition derart ist, dass die Pressposition (pp) auf der Grundlage des gemessenen Drucks anpassbar ist, wobei die Pressposition (pp) so festgelegt wird, dass sie der Position entspricht, in der der gemessene Druck einem voreingestellten Druck entspricht.

2. Presse (10) nach dem vorstehenden Anspruch, wobei die Bewegung der Pressfläche (13) entlang einer Richtung senkrecht zur Tablett erfolgt.

3. Presse (10) nach einem der vorstehenden Ansprüche, wobei sie ferner eine Vielzahl von Formen umfasst, wobei die Formen einzeln und beweglich mit der Tablett koppelbar sind.

4. Presse (10) nach dem vorstehenden Anspruch, wobei der Tablett (12) oder die Presse (10) entlang einer zweiten Richtung bewegbar ist, so dass jede Form (11) und jedes entsprechende verformbare Gegenstand (14) eine Position erreicht, die mit der Pressposition übereinstimmt, wobei der Tablett (12) optional ein Förderband (19) umfasst oder die Presse (10) mittels Verschiebungsmittel relativ zum Tablett (12) bewegbar ist.

5. Presse (10) nach einem der vorstehenden Ansprüche, wobei die Druckregelmittel Rechenmittel umfassen, die so konfiguriert sind, dass sie die Bewegung der Pressvorrichtung digital steuern.

6. Presse (10) nach einem der vorstehenden Ansprüche, wobei die Pressvorrichtung ferner eine Kurbelwelle (15t) und eine pneumatische Einrichtung umfasst, wobei die Kurbelwelle (15t) so ausgebildet ist, dass sie die pneumatische Einrichtung (16) und die Pressfläche gemeinsam bewegt , und wobei die pneumatische Einrichtung (16) so ausgelegt ist, dass sie die Bewegung der Pressvorrichtung zwischen der Ruhe- und der Pressposition so einstellt, dass die Pressposition (pp) durch die pneumatische Einrichtung anpassbar ist, wobei die Presse (10) optional ferner ein Druckventil umfasst, wobei das Druckventil so ausgelegt ist, dass es bei Erreichen des gemessenen Drucks, der einem voreingestellten Druck entspricht, überschüssigen Druck aus der Pressvorrichtung ablässt.

7. Presse (10) nach einem der vorstehenden Ansprüche, wobei sie ferner eine Anpassung des voreingestellten Drucks auf der Grundlage mindestens eines Parameters des verformbaren Gegenstands umfasst.

8. Presse (10) nach einem der vorstehenden Ansprüche, wobei es sich um eine Teigpresse handelt, wobei das verformbare Gegenstand (14) aus einem in einer Form bereitgestellten Teigstück besteht.

9. Presse (10) nach den Ansprüchen 7 und 8, wobei sie ferner eine Anpassung des voreingestellten Drucks auf der Grundlage mindestens eines Parameters des Teigs umfasst.

10. Verfahren zum Pressen und Formen eines in einer Form angeordneten verformbaren Gegenstands (14), wobei die Form (11) wiederum auf einem relativ zur Presse beweglichen Tablett (12) angeordnet ist, wobei das Verfahren umfasst:
i) Einbringen des verformbaren Gegenstands (14) in eine Form,
ii) Einleiten der Bewegung einer Pressfläche (13) aus einer Ruheposition (rp) weg vom verformbaren Gegenstand (14) hin zu einer Pressposition (pp), in der der verformbare Gegenstand (14) durch die Pressfläche gepresst wird,
iii) Messen des Drucks, den die Pressvorrichtung auf das in der Form angeordnete verformbare Gegenstand (14) ausübt,
iv) Festlegen der Pressposition (pp) und Anhalten der Pressfläche (13) mittels einer programmierbaren Steuerung, wenn der gemessene Druck einem voreingestellten Druck entspricht, wodurch der verformbare Gegenstand (14) in der Tablett geformt wird,
optional erfolgt die Bewegung der Pressfläche (13) entlang einer Richtung senkrecht zur Tablett.

11. Verfahren nach dem vorstehenden Anspruch, wobei es sich bei den Formen um eine Vielzahl von Formen handelt, die einzeln und beweglich mit dem Tablett verbunden sind, wobei optional die Bewegung des Tabletts (12) oder der Presse (10) entlang einer zweiten Richtung erfolgt, so dass jede Form (11) und jedes entsprechende verformbare Gegenstand (14) eine Position erreicht, die mit der Pressposition übereinstimmt, wobei optional das Tablett (12) ein Förderband (19) umfasst oder die Presse (10) Verschiebungsmittel (18) umfasst, die sie relativ zum Tablett bewegt, wobei die Bewegung der Pressvorrichtung gegebenenfalls digital gesteuert wird.

12. Verfahren nach einem der Ansprüche 10-11, wobei eine Kurbelwelle (15t) die pneumatische Einrichtung (16) und die Pressfläche gemeinsam bewegt, und die pneumatische Einrichtung (16) die Bewegung der Pressvorrichtung zwischen der Ruhe- und der Pressposition so einstellt, dass die Pressposition (pp) durch die pneumatische Einrichtung anpassbar ist, wobei gegebenenfalls überschüssiger Druck der Pressvorrichtung nach Erreichen des gemessenen Drucks, der einem voreingestellten Druck entspricht, mittels eines Druckventils abgelassen wird.

13. Verfahren nach einem der Ansprüche 10-12, wobei es ferner eine Anpassung des voreingestellten Drucks auf der Grundlage mindestens eines Parameters des verformbaren Gegenstands umfasst.

14. Verwendung der Presse (10) nach einem der Ansprüche 1-9 als Teigpresse, wobei das verformbare Gegenstand (14) aus einem Teigstück besteht und die Form (11) aus einer Form (11) zum Bereitstellen und Formen eines Teigstücks besteht.

15. System zum Formen einer Vielzahl von verformbaren Gegenständen, wobei das System eine Vielzahl von Pressen nach einem der Ansprüche 1-9 und Verschiebungsmittel umfasst, wobei die Verschiebungsmittel (18) so ausgelegt sind, dass sie die Pressen in zwei Richtungen bewegen, die Teil einer Ebene sind, die senkrecht zur Bewegungsrichtung der Pressvorrichtung verläuft und parallel zu der Ebene ist, in der das Tablett (12) und die Formen angeordnet sind, wobei die verformbaren Gegenstände in den Formen bereitgestellt werden, wobei die Pressen gegebenenfalls nach Anspruch 6 ausgebildet sind, wobei das System n-Pressen umfasst, die ihrerseits n-Pressflächen aufweisen, wobei jeder Pressfläche eine pneumatische Einrichtung zugeordnet ist, wobei die Pressen m-Kurbelwellen umfassen, wobei *m < n* gilt, wobei auf mindestens zwei Pressflächen und die entsprechenden pneumatischen Einrichtungen (16) eine Kurbelwelle entfällt, so dass die Bewegung einer Kurbelwelle (15t) bewirkt, dass sich die mindestens zwei Pressflächen und die entsprechenden pneumatischen Einrichtungen (16) gemeinsam und synchron zwischen der Ruhe- und der Pressposition bewegen.

## Revendications

1. Presse (10) destinée à former un objet déformable (14) disposé dans un moule (11), lui-même disposé sur un plateau (12) mobile par rapport à la presse, la presse (10) comprenant :
i) des moyens de pressage comprenant une surface de pressage (13) mobile entre une position de repos (rp), éloignée de l'objet déformable (14) lorsque celui-ci est disposé dans le moule (11), et une position de pressage (pp), dans laquelle l'objet déformable (14) est pressé par la surface de pressage (13),
ii) des moyens de contrôle de pression, lesdits moyens de contrôle de pression comprenant un contrôleur programmable configuré pour mesurer et contrôler la pression que les moyens de pressage exercent sur un objet déformable (14) disposé dans le moule,
dans laquelle le mouvement des moyens de pressage entre les positions de repos et de pressage est tel que la position de pressage (pp) est adaptable en fonction de la pression mesurée, la position de pressage (pp) étant établie de manière à correspondre à la position dans laquelle la pression mesurée correspond à une pression prédéfinie.

2. Presse (10) selon la revendication précédente, dans laquelle le mouvement de la surface de pressage (13) s'effectue selon une direction perpendiculaire au plateau.

3. Presse (10) selon l'une quelconque des revendications précédentes, laquelle comprend en outre une pluralité de moules, les moules pouvant être couplés individuellement et de manière mobile au plateau.

4. Presse (10) selon la revendication précédente, dans laquelle le plateau (12) ou la presse (10) est mobile selon une deuxième direction, de telle sorte que chaque moule (11) et chaque objet déformable correspondant (14) atteigne une position coïncidant avec la position de pressage, le plateau (12) comprenant éventuellement un convoyeur à bande (19), ou la presse (10) est mobile par rapport au plateau (12) au moyen de moyens de translation.

5. Presse (10) selon l'une quelconque des revendications précédentes, dans laquelle les moyens de contrôle de pression comprennent des moyens de calcul configurés pour actionner numériquement le mouvement des moyens de pressage.

6. Presse (10) selon l'une quelconque des revendications précédentes, dans laquelle les moyens de pressage comprennent en outre un vilebrequin (15t) et des moyens pneumatiques, le vilebrequin (15t) étant configuré pour déplacer conjointement les moyens pneumatiques (16) et la surface de pressage, et les moyens pneumatiques (16) étant configurés pour ajuster le mouvement des moyens de pressage entre les positions de repos et de pressage, de telle sorte que la position de pressage (pp) soit adaptable par les moyens pneumatiques, la presse (10) comprenant en outre, éventuellement, une soupape de pression, la soupape de pression étant configurée pour relâcher la pression excessive des moyens de pressage dès que la pression mesurée atteint une valeur de pression prédéfinie.

7. Presse (10) selon l'une quelconque des revendications précédentes, laquelle comprend en outre, en fonction d'au moins un paramètre de l'objet déformable, l'adaptation de la pression prédéfinie.

8. Presse (10) selon l'une quelconque des revendications précédentes, laquelle est une presse à pâte, l'objet déformable (14) étant constitué d'un pâton placé dans un moule.

9. Presse (10) selon les revendications 7 et 8, laquelle comprend en outre, en fonction d'au moins un paramètre de la pâte, l'adaptation de la pression prédéfinie.

10. Procédé de pressage et de formage d'un objet déformable (14) disposé dans un moule, le moule (11) étant lui-même disposé sur un plateau (12) mobile par rapport à la presse, le procédé comprenant :
i) disposer l'objet déformable (14) dans un moule,
ii) déclencher le mouvement d'une surface de pressage (13) depuis une position de repos (rp), éloignée de l'objet déformable (14), vers une position de pressage (pp) dans laquelle l'objet déformable (14) est pressé par la surface de pressage,
iii) mesurer la pression exercée par les moyens de pressage sur l'objet déformable (14) disposé dans le moule,
iv) établir la position de pressage (pp) et arrêter la surface de pressage (13), au moyen d'un contrôleur programmable, lorsque la pression mesurée correspond à une pression prédéfinie, formant ainsi l'objet déformable (14) dans le plateau,
le mouvement de la surface de pression (13) étant éventuellement effectué selon une direction perpendiculaire au plateau.

11. Procédé selon la revendication précédente, dans lequel les moules sont une pluralité de moules, couplés individuellement et de manière mobile au plateau, éventuellement dans lequel le mouvement du plateau (12) ou de la presse (10) s'effectue selon une deuxième direction de telle sorte que chaque moule (11) et chaque objet déformable correspondant (14) atteignent une position coïncidant avec la position de pressage, le plateau (12) comprenant éventuellement un convoyeur à bande (19) ou la presse (10) comprenant des moyens de translation (18) la déplaçant par rapport au plateau, le mouvement des moyens de pressage étant éventuellement commandé numériquement.

12. Procédé selon l'une quelconque des revendications 10 à 11, dans lequel un vilebrequin (15t) déplace conjointement les moyens pneumatiques (16) et la surface de pressage, et les moyens pneumatiques (16) règlent le mouvement des moyens de pressage entre les positions de repos et de pression de telle sorte que la position de pressage (pp) soit adaptable par les moyens pneumatiques, éventuellement la pression excessive exercée par les moyens de pressage étant relâchée au moyen d'une soupape de pression dès que la pression mesurée correspondant à une pression prédéfinie est atteinte.

13. Procédé selon l'une quelconque des revendications 10 à 12, lequel comprend en outre, sur la base d'au moins un paramètre de l'objet déformable, l'adaptation de la pression prédéfinie.

14. Utilisation de la presse (10) selon l'une quelconque des revendications 1 à 9 en tant que presse à pâte, l'objet déformable (14) consistant en un pâton et le moule (11) consistant en un moule (11) destiné à recevoir et à former un pâton.

15. Système destiné à former une pluralité d'objets déformables, le système comprenant une pluralité de presses selon l'une quelconque des revendications 1 à 9 et des moyens de translation, les moyens de translation (18) étant configurés pour déplacer les presses dans deux directions faisant partie d'une surface perpendiculaire à la direction de mouvement des moyens de pressage, et qui sont parallèles à la surface sur laquelle sont disposés le plateau (12) et les moules, les objets déformables étant disposés dans les moules ; éventuellement, les presses sont selon la revendication 6, le système comprenant *n* presses comprenant chacune à son tour *n* surfaces de pressage, à chacune correspondant un moyen pneumatique, les presses comprenant *m* vilebrequins où *m < n*, de sorte qu'à au moins deux surfaces de pressage et moyens pneumatiques correspondants (16) correspond un vilebrequin, de telle sorte que le mouvement d'un vilebrequin (15t) provoque le déplacement conjoint et synchrone desdites au moins deux surfaces de pressage et moyens pneumatiques correspondants (16) entre les positions de repos et de pressage.
